# EUROPÄISCHE PATENTANMELDUNG

(11) **EP 4 292 410 A1**
(43) Veröffentlichungstag der Anmeldung: **20.12.2023**
(21) Anmeldenummer: 23178597.3
(22) Anmeldetag: 12.06.2023
(51) Int. Cl.: A01B 23/02, A01B 61/04

(54) **LANDWIRTSCHAFTLICHES ARBEITSGERÄT**

(30) Priorität: 14.06.2022 DE 102022114980
(71) Anmelder: Lemken GmbH & Co KG, 46519 Alpen (DE)
(72) Erfinder: Hätzel, Eric, 47447 Moers (DE); Hartl, Robert, 3762 Ludweis (AT); Struik, Lauwrens, 3247CN Dirksland (NL)

(57) **Zusammenfassung**

Die vorliegende Erfindung betrifft ein landwirtschaftliches Arbeitsgerät zur Bodenbearbeitung mit einem Rahmen, welcher mindestens einen Werkzeugrahmen umfasst, einer Mehrzahl von verschwenkbar an dem mindestens einen Werkzeugrahmen angeordneten Bodenwerkzeugen, und einer Vorspanneinrichtung zum Vorspannen der Bodenwerkzeuge mittels einer Vorspannkraft, wobei die Vorspanneinrichtung mindestens ein fluidgefülltes Vorspannelement aufweist. Erfindungsgemäß ist das Vorspannelement mindestens einem Bodenbearbeitungselement zugeordnet und ist, insbesondere unmittelbar, an dem Rahmen, insbesondere dem Werkzeugrahmen, angeordnet, und bei der Aufbringung der Vorspannkraft auf das mindestens eine Bodenwerkzeug bildet der Rahmen, insbesondere der Werkzeugrahmen, ein Widerlager des Vorspannelementes.

## Beschreibung

Die vorliegende Erfindung betrifft ein landwirtschaftliches Arbeitsgerät zur Bodenbearbeitung.

Bei der landwirtschaftlichen Bodenbearbeitung werden unterschiedliche Werkzeuge eingesetzt, welche an einen Traktor angehängt oder angebaut werden können. Für eine mechanische Unkrautbekämpfung werden üblicherweise Zinkenstriegel oder Hackstriegel eingesetzt, die oberflächennah durch den zu bearbeitenden Boden geführt werden und dabei mechanisch Unkräuter ausreißen und/oder mit Erde verschütten. Die Zinkenstriegel werden dabei häufig mit mehreren Zinkenstriegeln nebeneinander und in mehreren Reihen hintereinander abgeordnet.

Ein weiteres landwirtschaftliches Bodenbearbeitungsgerät mit Zinkenstriegeln ist in der DE 202012004337 U1 offenbart, wobei die Zinkenstriegel an einem Traggestell verschwenkbar angeordnet und jeweils über eine Vorspannfeder gegen einen Anschlag vorgespannt sind. Eine Vorspannkraft der Vorspannfedern kann gruppenweise durch einen Bediener verändert werden. Eine Vorspannfeder ist jeweils aus zwei hintereinander geschalteten Federn gebildet, wodurch bei einer Auslenkung des zugehörigen Striegelzinken zunächst eine erste Feder und nach einer bestimmten Auslenkung eine zweite Feder zur Wirkung gelangt. Die auf den Zinken und somit bei der Bodenbearbeitung wirkende Kraft ist hierbei nicht konstant, sondern variiert je nach Auslenkung der Striegelzinken, wodurch es zu einer ungleichmäßigen Bearbeitung des Bodens kommen kann.

Ein weiteres Arbeitsgerät zur Bodenbearbeitung, eine Zinkenegge mit Striegelzinken, ist aus der US 2016 234994 A1 bekannt. Hierbei sind die Zinken derart konfiguriert, dass sie zwischen einer abgesenkten Position und einer angehobenen Position bewegbar sind, wobei die Möglichkeit besteht, einzelne Zinken oder Zinkenreihen in verschiedene Positionen in Bezug auf eine Feldoberfläche abzusenken und anzuheben. Für das Betätigen einzelner Zinken ist ein aufwändiger Betätigungsmechanismus erforderlich, welcher neben einem pneumatisch oder hydraulisch betätigten Zylinder auch einen Rückstellmechanismus umfasst. Dieser aufwändige Betätigungsmechanismus führt nicht nur zu einem höheren Gerätegewicht, sondern auch zu einem erhöhten Montage- und Wartungsaufwand.

Es ist daher die Aufgabe der vorliegenden Erfindung ein landwirtschaftliches Arbeitsgerät zur anzugeben, welches die oben genannten Nachteile behebt.

Die Aufgabe wird gelöst durch ein Arbeitsgerät gemäß den Merkmalen des Anspruches 1. Vorteilhafte Ausgestaltungen der Erfindung sind in den Unteransprüchen angegeben.

Ein landwirtschaftliches Arbeitsgerät zur Bodenbearbeitung mit einem Rahmen, welcher mindestens einen Werkzeugrahmen umfasst, einer Mehrzahl von verschwenkbar an dem mindestens einen Werkzeugrahmen angeordneten Bodenwerkzeugen, und einer Vorspanneinrichtung zum Vorspannen der Bodenwerkzeuge mittels einer Vorspannkraft, wobei die Vorspanneinrichtung mindestens ein fluidgefülltes Vorspannelement aufweist. Erfindungsgemäß ist das Vorspannelement mindestens einem Bodenwerkzeug zugeordnet und ist, insbesondere unmittelbar, an dem Rahmen, insbesondere dem Werkzeugrahmen, angeordnet, und bei der Aufbringung der Vorspannkraft auf das mindestens eine Bodenwerkzeug bildet der Rahmen, insbesondere der Werkzeugrahmen, ein Widerlager des Vorspannelementes.

Das Arbeitsgerät kann mittels einer rahmenseitig angeordneten Koppelvorrichtung, beispielsweise für einen Dreipunktkraftheber, mit einem Zugfahrzeug verbunden werden. Der Rahmen des Arbeitsgerätes kann mindestens einen Werkzeugrahmen umfassen, wobei jedoch üblicherweise mehrere Werkzeugrahmen neben und/oder hintereinander quer zu einer Arbeitsrichtung angeordnet sein können. An einem Werkzeugrahmen können, insbesondere nebeneinander, eine Mehrzahl an Bodenwerkzeugen, beispielsweise Striegelzinken, angeordnet sein. Die Bodenwerkzeuge können jeweils in einer Lagerstelle verschwenkbar an dem Werkzeugrahmen angeordnet sein und könne so beispielsweise zwischen einer Transportposition und einer Arbeitsposition verschwenkt werden. In einer Transportposition können die Bodenwerkzeuge von dem Boden weg und zum Rahmen bzw. Werkzeugrahmen hin hochgeschwenkt sein. In einer Arbeitsposition können die Bodenwerkzeuge zum Boden hin und von dem Rahmen weg verschwenkt sein. Um insbesondere in der Arbeitsposition eine hinreichend große Kraft zur Bearbeitung des Bodens aufbringen zu können, weist das Arbeitsgerät eine Vorspanneinrichtung auf. Die Vorspanneinrichtung umfasst mindestens ein fluidgefülltes Vorspannelement, durch welches mindestens ein zugeordnetes Bodenwerkzeug mit einer Vorspannkraft beaufschlagt werden kann, wodurch beispielsweise ein tieferes Bearbeiten des Bodens durch das Bodenwerkzeug ermöglicht werden kann.

Das fluidgefüllte Vorspannelement kann beispielsweise ein pneumatisch oder hydraulisch betätigbares Vorspannelement sein, wobei durch eine Änderung der Menge an Fluid in dem Vorspannelement eine Volumenänderung des Vorspannelementes und/oder eine Druckänderung in dem Vorspannelement bewirkt werden kann. Bei einer Volumenänderung kann das Vorspannelement sich bis zu einem maximalen Wert ausdehnen oder sich elastisch verformen. Das Vorspannelement kann, insbesondere unmittelbar, an dem Werkzeugrahmen angeordnet sein. Das Vorspannelement kann dabei innerhalb oder außerhalb des Rahmens, insbesondere des Werkzeugrahmens, angeordnet sein. Ein oder mehrere Bodenwerkzeuge können mittels Übertragungselementen wie Stangen und/oder Drähten mit dem Vorspannelement wirkverbunden sein. Hierbei kann ein Vorspannelement an dem Rahmen angeordnet sein und mittels Übertragungselementen mit den, insbesondere allen, Bodenwerkzeugen verbunden sein. Bei einer Änderung der Fluidmenge innerhalb des Vorspannelementes bildet der Rahmen, insbesondere der Werkzeugrahmen, ein Widerlager für eine Volumenänderung bzw. Ausdehnung und/oder Druckänderung des Vorspannelementes, wodurch eine im Wesentlichen gerichtete Ausdehnung des Vorspannelementes erreicht werden kann. Das Vorspannelement kann den Rahmen, insbesondere den Werkzeugrahmen, unmittelbar, zwischenelementefrei kontaktieren, wobei keine beweglichen Übertragungselemente, beispielsweise Hebel, zur Abstützung des Vorspannelementes an dem Rahmen benötigt werden. Hierdurch werden weniger Bauteile für die Vorspanneinrichtung benötigt, wodurch ein Montageaufwand und die Wartung des Arbeitsgerätes vereinfacht werden kann.

Darüber hinaus kann durch die vereinfachte Bauweise ein Gewicht der Vorspanneinrichtung und damit des Arbeitsgerätes vorteilhaft verringert werden. Ein erfindungsgemäßes fluidgefülltes Vorspannelement hat zudem den Vorteil, dass eine auf ein Bodenwerkzeug wirkende Vorspannkraft wegunabhängig ist und im Wesentlichen konstant ist, im Gegensatz zu beispielsweise üblicherweise verwendeten Federelementen. Bei einer Verbindung mehrerer Bodenwerkzeuge mit einem Vorspannelement gemäß der Erfindung kann zudem vorteilhaft sein, dass bei einem beispielsweise bodenbedingten Verschwenken, insbesondere einer vertikalen Auslenkung, eines Bodenwerkzeuges eine auf die weiteren Bodenwerkzeuge wirkende Vorspannkraft anteilig erhöht werden kann, wodurch eine bessere Stützwirkung gegenüber dem Boden bewirkt werden kann.

Vorzugsweise kontaktiert das Vorspannelement mindestens ein schwenkbares Bodenwerkzeug unmittelbar. Ein Bodenwerkzeug, insbesondere in Form eines Striegelzinken, kann derart an dem Rahmen und relativ zu dem Vorspannelement angeordnet sein, dass das Bodenwerkzeug das Vorspannelement unmittelbar, also ohne bewegliche Zwischenelemente, kontaktiert. Ein unmittelbarer Kontaktbereich zwischen Vorspannelement und Bodenwerkzeug kann oberhalb oder unterhalb einer Lagerstelle des Bodenwerkzeuges erfolgen. Diese Ausgestaltung hat den Vorteil, dass ein Aufbau der Vorspanneinrichtung weiter vereinfacht werden kann und somit der Montageaufwand, der Wartungsaufwand und das Gewicht reduziert werden können.

In einer bevorzugten Ausgestaltung der Erfindung weist das Vorspannelement, insbesondere in Form eines Schlauches, eine längliche Erstreckung entlang einer Längsachse auf und die Vorspannkraft wirkt in einer radialen Richtung des Vorspannelementes, im Wesentlichen senkrecht zu der Längsachse. Das Vorspannelement kann eine im Wesentlichen deutlich größere Erstreckung entlang einer Längsachse aufweisen als rechtwinklig, d.h. in radialer Richtung, zu dieser. Das Vorspannelement kann entlang des Rahmens, insbesondere Werkzeugrahmens, angeordnet sein und an diesem abgestützt sein. Ein Kontakt zwischen Vorspannelement und Rahmen, insbesondere Werkzeugrahmen, kann dabei in Form eines linienförmigen und/oder flächigen Kontaktes ausgestaltet sein. Die Vorspannkraft des Vorspannelementes kann, im Gegensatz zu einem Pneumatikzylinder, in radialer Richtung wirken. Ein Vorspannelement in Form eines Schlauches kann einen im Wesentlichen festen maximalen Durchmesser in radialer Richtung aufweisen oder in radialer Richtung elastisch verformbar sein. Ein Vorspannelement in Form eines Schlauches hat den Vorteil, dass durch die schmale, längliche Form eine bauraumsparende Anordnung, insbesondere entlang eines Rahmens oder Werkzeugrahmens, möglich ist. Zudem ist es so auf einfache Art möglich eine Mehrzahl an Bodenwerkzeugen mit einer Vorspannkraft zu beaufschlagen. Weiterhin weist das Vorspannelement ein geringeres Gewicht auf, als beispielsweise Hydraulik- oder Pneumatikzylinder.

In einer besonders bevorzugten Ausgestaltung der Erfindung ist eine Oberfläche des Vorspannelementes, zumindest teilweise, verschleißfest ausgestaltet und/oder weist zumindest teilweise eine im Wesentlichen ebene Kontaktfläche zur Kontaktierung eines Bodenwerkzeuges auf. Eine verschleißfeste Oberfläche soll in dem Bereich, in dem sich das Vorspannelement und der Rahmen und/oder ein Bodenwerkzeug kontaktieren, eine Beschädigung des Vorspannelementes vermeiden und kann durch eine entsprechende Materialauswahl des Vorspannelementes, beispielsweise in Form eines Gewebeschlauches, erreicht werden. Bei einer teilweise verschleißfesten Oberfläche oder einem Teilbereich der Oberfläche mit besonderes erhöhtem Verschleißschutz kann ein entsprechender Werkstoff, insbesondere stoffschlüssig, beispielsweise durch Kleben oder Vulkanisieren, mit der Oberfläche verbunden werden. Dies kann beispielsweise eine Schicht aus einem elastischen Werkstoff sein, welche eine Bewegung des Vorspannelementes mitmachen kann. Eine ebene Kontaktfläche kann insbesondere durch eine im Wesentlichen plane Kontaktplatte, welche stoffschlüssig mit dem Vorspannelement verbunden sein kann, geschaffen werden. Dabei können an einem Vorspannelement mehrere, insbesondere entsprechend einer Anzahl an Bodenwerkzeugen, Kontaktplatten angeordnet sein. Hierdurch kann die Standzeit eines Vorspannelementes erhöht werden.

In einer weiteren Ausgestaltung der Erfindung weist das Vorspannelement radial außenseitig mindestens ein Verbindungselement zur Zug-/Druckkraft-Übertragung mit dem Rahmen, insbesondere dem Werkzeugrahmen, und/oder mindestens einem Bodenwerkzeug auf. Ein derartiges Verbindungselement kann an außenseitig an dem Vorspannelement angeordnet sein und zumindest teilweise mit dem Vorspannelement, insbesondere stoffschlüssig, verbunden sein. Ein Verbindungselement kann in Form einer Schlaufe, einer Öse und/oder in Form eines Steckers ausgestaltet sein. Denkbar ist, dass ein Bodenwerkzeug und/oder ein Rahmen, insbesondere Werkzeugrahmen, zumindest teilweise formschlüssig in das Verbindungselement eingreifen können, wodurch eine lösbare Verbindung zur Übertragung von Zug-/Druckkräften herstellbar ist. Dies hat den Vorteil, dass durch das Vorspannelement sowohl eine Druckkraft als auch eine Zugkraft, insbesondere auf das Bodenwerkzeug, übertragbar ist, wodurch eine kostengünstige bidirektionale Verstellung für Bodenwerkzeuge möglich wäre.

In einer besonders bevorzugten Ausgestaltung der Erfindung ist das Bodenwerkzeug derart ausgebildet und ausgestaltet, dass das Bodenwerkzeug einen linienförmigen Kontakt mit dem Vorspannelement ausbildet. Das Bodenwerkzeug kann, insbesondere oberhalb und/oder unterhalb, seiner Lagerstelle mindestens einen im Wesentlichen geraden Abschnitt zur Kontaktierung des Vorspannelementes aufweisen, wodurch ein im Wesentlichen linienförmiger Kontakt ermöglicht wird. Das Bodenwerkzeug kann einen rahmenparallelen Abschnitt aufweisen und/oder U-förmig ausgestaltet sein. Dies hat den Vorteil, dass die Vorspannkraft über eine größere Fläche auf das Bodenwerkzeug übertragen wird, wodurch ein Verschleiß des Vorspannelementes verringert werden kann.

In einer weiter besonders bevorzugten Ausgestaltung der Erfindung ist der Rahmen, insbesondere der Werkzeugrahmen, in Form eines offenen oder zumindest teilweise geschlossen Profils ausgebildet. Ein Profil kann dabei als geschlossenes oder zumindest teilweise geschlossenes Kastenprofils oder als offenes Profil, beispielsweise in Form eines U-Profils, ausgestaltet sein. Bei einem geschlossenen Profil des Rahmens, insbesondere des Werkzeugrahmens, kann das Vorspannelement außenseitig in an diesem angeordnet sein und an einer Außenseite des Profils abgestützt sein. Bei einem offenen oder zumindest teilweise geschlossenen Profil kann ein Vorspannelement innenseitig des Profils, also innerhalb des Rahmens oder Werkzeugrahmens, angeordnet sein, wodurch das Vorspannelement besser vor Umwelteinflüssen und Schäden geschützt sein kann. Ein zumindest teilweise geschlossenes Profil kann in Form eines geschlossenen Profils mit umfangsseitigen Öffnungen ausgestaltet sein, wobei an einer Öffnung jeweils ein Bodenwerkzeug zur Kontaktierung des Vorspannelementes angeordnet sein kann.

In einer weiteren bevorzugten Ausgestaltung der Erfindung ist ein Bodenwerkzeug an einer an oder in dem Rahmen, insbesondere dem Werkzeugrahmen, ausgebildeten Lagerstelle verschwenkbar gelagert. Eine Lagerstelle des Bodenwerkzeuges kann dabei innerhalb oder außerhalb des Profils ausgestaltet sein. Die Lagerstelle kann dabei durch den Werkzeugrahmen ausgebildet sein und/oder in Form eines zusätzlichen Bauteils zur schwenkbaren Festlegung des Bodenwerkzeuges, welches innerhalb oder außerhalb des Werkzeugrahmens angeordnet werden kann. Durch die Ausgestaltung diese Anordnung der Lagerstelle kann die Anzahl an Bauteilen weiter reduziert und somit die Montage weiter vereinfacht werden.

Vorteilhafterweise weist die Vorspanneinrichtung ein dem Vorspannelement entgegenwirkendes Rückstellelement auf, wobei durch das Rückstellelement eine der Vorspannkraft im Wesentlichen entgegenwirkende Rückstellkraft erzeugbar ist.

Ein Rückstellelement kann mindestens einem Vorspannelement zugeordnet sein und mittelbar oder unmittelbar mit einem Bodenwerkzeug verbunden sein. Durch ein Rückstellelement kann ein Vorspannelement einfachwirkend und damit konstruktiv einfach gestaltet werden, wobei eine Rückstellung der Bodenwerkzeuge, insbesondere jeweils, durch ein Rückstellelement erfolgen kann. Ein Rückstellelement kann beispielsweise in Form eines Federelementes ausgestaltet sein.

In einer besonders vorteilhaften Ausgestaltung ist das Rückstellelement in Form eines zweiten Vorspannelementes, insbesondere in Form eines Schlauches, ausgebildet, wobei insbesondere das Rückstellelement unmittelbar an oder in dem Rahmen, insbesondere dem Werkzeugrahmen, angeordnet ist. Ein Rückstellelement in Form eines zweiten Vorspannelementes kann die gleiche Form aufweisen wie ein Vorspannelement, wirkt jedoch mit seiner Rückstellkraft in entgegengesetzter Richtung des Vorspannelementes. Vorteilhat ist hier, dass im Wesentlichen die gleichen Bauteile, insbesondere Schläuche, für unterschiedliche Wirkung genutzt werden können und so ein einfach montierbares Rückstellelement mit geringem Gewicht eingesetzt werden kann. Das Rückstellelement und das Vorspannelement, insbesondere beide in Form eines Schlauches, können paarweise zu beiden Seiten mindestens eines Bodenwerkzeuges angeordnet werden. Das Rückstellelement kann außerhalb oder innerhalb des Rahmens, insbesondere des Werkzeugrahmens, angeordnet sein. Hierdurch kann eine steuerbare Verschwenkung des mindestens einen Bodenbearbeitungswerkzeuges ermöglicht werden. Das Rückstellelement kann dabei unmittelbar an dem Rahmen, insbesondere Werkzeugrahmen, anliegen und an diesem bei der Aufbringung der Rückstellkraft abgestützt sein.

In einer weiterhin bevorzugten Ausgestaltung ist die Vorspanneinrichtung derart ausgestaltet und ausgebildet, dass mehrere Vorspannelemente und/oder Rückstellelemente einzeln oder in Gruppen betätigbar sind. Durch die individuelle Betätigung einzelner Vorspannelemente und/oder Rückstellelemente können gezielt Bodenwerkzeuge in Eingriff mit dem Boden gebracht werden oder von dem Boden gelöst werden, um eine Bearbeitung optimal an die Feldgeometrie anpassen zu können.

Vorzugsweise sind mindestens ein Vorspannelement und mindestens ein diesem Vorspannelement zugeordnetes Rückstellelement derart fluidisch miteinander verbunden, dass diese jeweils eine entgegengesetzte Bewegung in radialer Richtung ausführen. Hierbei kann das Fluid von einem Element in das andere gefördert werden, beispielsweise durch eine Pumpe, so dass das Vorspannelement und das zugeordnete Rückstellelement gleichzeitig entgegengesetzt auf mindestens ein Bodenwerkzeug wirken. Hierdurch kann eine Verlagerung eines Bodenwerkzeuges besser, und insbesondere ohne Spiel, gesteuert werden.

Vorzugsweise sind mindestens zwei Vorspannelemente, und/oder mindestens zwei Rückstellelemente, welche in Arbeitsrichtung im Wesentlichen hintereinander und/oder an demselben Rahmen, insbesondere Werkzeugrahmen, angeordnet sind, fluidisch gekoppelt. An demselben Rahmen angeordnete und fluidisch gekoppelte Vorspannelement und/oder Rückstellelemente ermöglichen eine gleichzeitige und im Wesentlichen gleichförmige Verschwenkung der zugeordneten Bodenwerkzeuge. Bei in Arbeitsrichtung hintereinander angeordneten Vorspannelementen und/oder Rückstellelementen, welche an unterschiedlichen Rahmen bzw. Werkzeugrahmen angeordnet sind, kann ebenfalls eine gleichzeitige und im Wesentlichen gleichförmige Verschwenkung der zugeordneten Bodenwerkzeuge ermöglicht werden. Ein weiterer Vorteil ist, dass bei einer vertikalen Auslenkung einzelner Bodenwerkzeuge, der von diesen beispielsweise auf das Vorspannelement ausgeübte erhöhte Druck über das Fluid auf die anderen Bodenwerkzeuge übertragen werden kann und diese eine etwas erhöhte Vorspannkraft erfahren, wodurch das Arbeitsgerät bei der Bodenbearbeitung stabilisiert werden kann.

Besonders bevorzugt weist die Vorspanneinrichtung mindestens einen Fluidspeicher, insbesondere Druckspeicher, mindestens ein Steuerventil, eine Pumpe und/oder eine Steuereinheit zur Ansteuerung mindestens eines Vorspannelementes und/oder Rückstellelementes auf. Durch die Steuereinheit und die weiteren Bauteile kann eine gezielte Ansteuerung der Vorspanneinrichtung und der einzelnen Vorspannelemente und/oder Rückstellelemente erfolgen, wodurch eine Bearbeitung des Bodens verbessert werden kann.

Weitere Einzelheiten der Erfindung sind den Figuren und der Figurenbeschreibung zu entnehmen, die eine bevorzugte Ausführung der Erfindung zeigen.

Es zeigen:
- Fig 1:: eine perspektivische Ansicht eines Arbeitsgerätes mit jeweils an einem Werkzeugrahmen angeordneten Vorspannelementen;
- Fig. 2:: eine Draufsicht eines Abschnittes eines Werkzeugrahmens mit einem daran angeordneten Vorspannelement aus Fig. 1;
- Fig. 3:: eine geschnittene Seitenansicht eines Werkzeugrahmens mit daran angeordnetem Vorspannelement gemäß Fig. 2;
- Fig. 4:: eine geschnittene Seitenansicht einer alternativ ausgestalteten Vorspanneinrichtung;
- Fig. 5:: eine geschnittene Seitenansicht einer weiteren Ausgestaltungsform einer Vorspanneinrichtung;
- Fig. 6:: eine perspektivische Darstellung einer Vorspanneinrichtung gemäß Fig. 5 ohne Rahmen;
- Fig. 7:: eine geschnittene Seitenansicht einer Vorspanneinrichtung mit Rückstellelement;
- Fig. 8:: eine geschnittene Seitenansicht mit einer Vorspanneinrichtung an einem offenen Werkzeugrahmen;
- Fig. 9:: eine Detailansicht eines Bodenwerkzeuges an einem Vorspannelement; und
- Fig. 10: eine Detailansicht eines formschlüssig mit dem Vorspannelement verbundenen Bodenwerkzeuges.

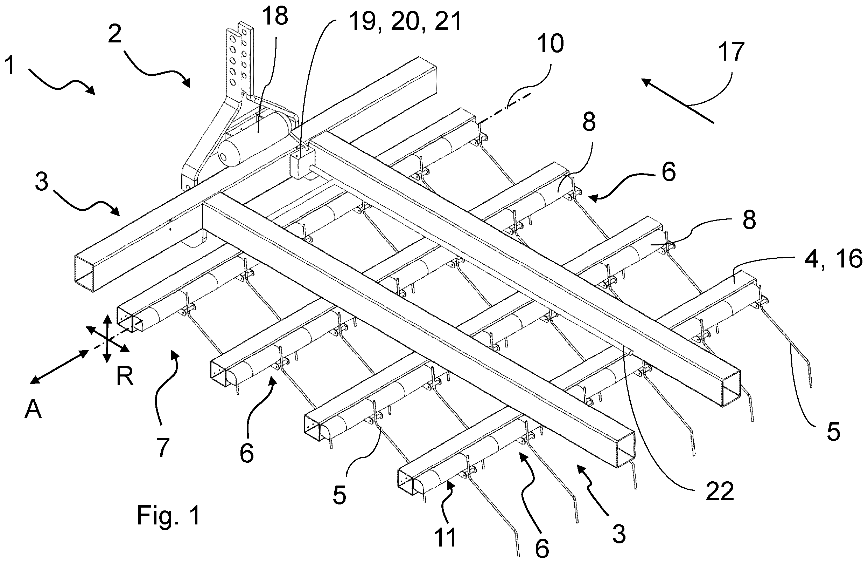

In Figur 1 ist ein landwirtschaftliches Arbeitsgerät 1 zur Bodenbearbeitung mit einem Rahmen 3 dargestellt, an dem eine Koppelvorrichtung 2 zur Verbindung des Arbeitsgerätes 1 mit einem Zugfahrzeug (nicht dargestellt) angeordnet ist. Der Rahmen 3 umfasst mehrere parallel zu einer Arbeitsrichtung angeordnete Werkzeugrahmen 4, wobei an jedem Werkzeugrahmen 4 beabstandet zueinander mehrere Bodenwerkzeuge 5 verschwenkbar angeordnet sind. Die Bodenwerkzeuge 5 in Form von Striegelzinken sind jeweils an einer Lagerstelle 6 mit dem Rahmen 3, insbesondere dem Werkzeugrahmen 4, schwenkbar verbunden. Die Bodenwerkzeuge 5 sind in einer abgesenkten Bodenbearbeitungsposition dargestellt und können in eine Transportposition angehoben werden. Für die Bodenbearbeitung müssen die Bodenwerkzeuge 5 mit einer gewissen Kraft auf den Boden wirken. Hierfür weist das Arbeitsgerät 1 eine Vorspanneinrichtung 7 auf, durch welche die Bodenwerkzeuge 5 mit einer einstellbaren Vorspannkraft beaufschlagt werden können. Die Vorspanneinrichtung 7 weist mindestens ein fluidgefülltes Vorspannelement 8 auf. Die dargestellte Arbeitsmaschine 1 weist an jedem Werkzeugrahmen 4 ein Vorspannelement 8 auf.

Gemäß der Erfindung ist ein Vorspannelement 8 mindestens einem Bodenwerkzeug 5 zugeordnet und ist, insbesondere unmittelbar, an dem Werkzeugrahmen 4 angeordnet. Bei dem in Fig. 1 dargestellten Arbeitsgerät 1 sind einem Vorspannelement 8 jeweils mehrere Bodenwerkzeuge 5 zugeordnet und können durch das Vorspannelement 8 mit einer Vorspannkraft beaufschlagt werden. Die Vorspannelemente 8 sind dabei jeweils als, insbesondere pneumatisch wirkende, Vorspannelemente 8 in Form von Schläuchen ausgebildet. Die Vorspannelemente 8 weisen dabei eine längliche Erstreckung in axialer Richtung A entlang einer Längsachse 10 auf. Die Vorspannelemente 8 weisen dabei, abhängig von einer Beaufschlagung mit einem Fluid, in radialer Richtung R einen veränderlichen Durchmesser auf. Ein Bodenwerkzeug 5 ist dabei derart an dem Vorspannelement 8 angeordnet, dass es das Vorspannelement 8 seitlich kontaktiert und bei einer Änderung der Form des Vorspannelementes 8 in radialer Richtung R durch das Vorspannelement 8 ebenfalls verlagert und mit einer Vorspannkraft vorgespannt wird. Bei der Aufbringung der Vorspannkraft auf das mindestens eine Bodenwerkzeug 5 durch das Vorspannelement 8 bildet der Werkzeugrahmen 4 ein Widerlager des Vorspannelementes 8.

Die dargestellten Vorspannelemente 8 sind jeweils außenseitig und an einer der Arbeitsrichtung entgegengesetzten Seite an den Werkzeugrahmen 4 angeordnet.

Jedem Vorspannelement 8 sind eine Mehrzahl an Bodenwerkzeugen 5 zugeordnet, welche das Vorspannelement 8 unmittelbar an einer dem Werkzeugrahmen 4 gegenüberliegenden Seite kontaktieren. Der Kontakt zwischen dem Bodenwerkzeug 5 und einer Oberfläche 11 des Vorspannelementes 8 ist ein linienförmiger Kontakt 15. Die Bodenwerkzeuge 5 sind an Lagerstellen 6 mit dem Werkzeugrahmen 4 schwenkbar verbunden, wobei das Vorspannelement 8 durch die Lagerstellen 6 bodenseitig abgestützt wird. Bei einer Ausdehnung des Vorspannelementes 8 in radialer Richtung R dient der Werkzeugrahmen 4 als Widerlager, so dass eine Vorspannkraft auf das verschwenkbare Bodenwerkzeug 5 übertragen werden kann. Eine Ausdehnung des Vorspannelementes 8 in radialer Richtung R kann durch Zuführen oder Abführen eines Fluides, beispielsweise in Form von Luft oder Hydrauliköl, erfolgen. Die Werkzeugrahmen 4 sind als geschlossene Profile 16 ausgebildet. Über Fluidleitungen 22, welche an dem Rahmen 3 und den Werkzeugrahmen 4 angeordnet sind, können die Vorspannelemente 8 mit einem Fluid, beispielsweise Luft oder Öl, versorgt werden und untereinander fluidisch gekoppelt werden. Die Fluidleitungen 22 verbinden die Vorspannelemente 8 mit einer Steuereinrichtung 19 zur Steuerung der auf mindestens ein Vorspannelement 8 wirkenden Vorspannkraft, wobei Vorspannelemente 8 einzeln oder gruppiert gesteuert werden können. Die Steuereinheit 19 umfasst eine Pumpe 21 und mindestens ein Steuerventil 20 zur Steuerung mindestens eines Vorspannelementes 8 und ist mit einem Fluidspeicher 18, insbesondere einem Druckspeicher, fluidisch verbunden.

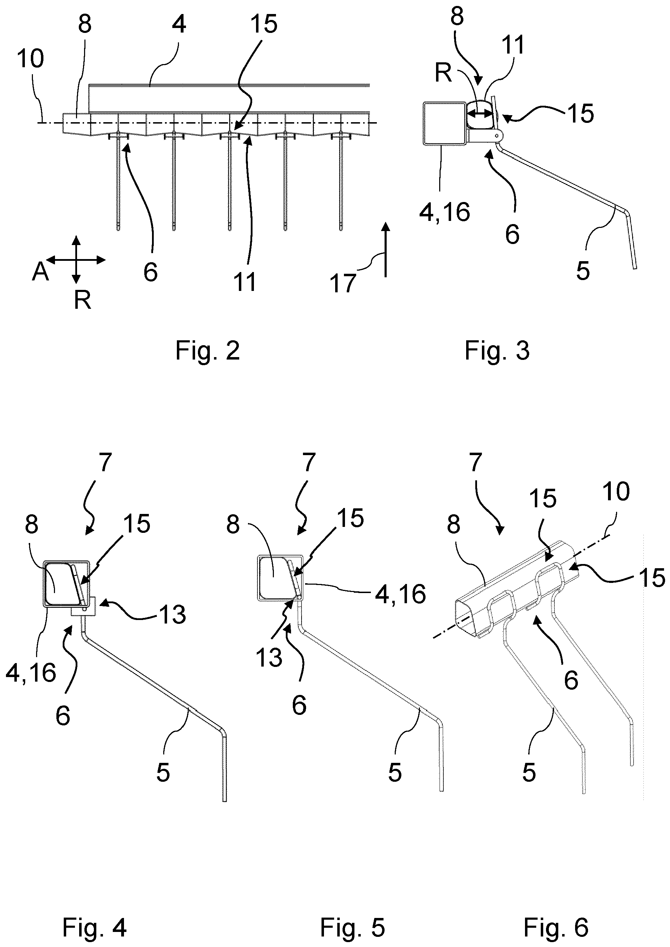

Eine detailliertere Draufsicht eines in Fig. 1 dargestellten Werkzeugrahmens 4 ist in Fig. 2 gezeigt. Das Vorspannelement 8 weist eine längliche Erstreckung entlang der Längsachse 10 in axialer Richtung A auf und ist außenseitig an dem geschlossenen Werkzeugrahmen 4 angeordnet. Bodenseitig ist das Vorspannelement 8 durch Lagerstellen 6 abgestützt, an denen die Bodenwerkzeuge 5 nebeneinander an dem Werkzeugrahmen 4 schwenkbar gelagert sind. Die Bodenwerkzeuge 5 kontaktieren die Oberfläche 11 des Vorspannelementes 8 unmittelbar durch einen linienförmigen Kontakt 15. Durch eine Beaufschlagung des Vorspannelementes 8 mit dem Fluid kann dieses sich in radialer Richtung R ausdehnen, wobei das Vorspannelement 8 an dem Werkzeugrahmen 4 als Widerlager abgestützt ist und eine Vorspannkraft auf das Bodenwerkzeug 5 ausübt, welches dadurch verschwenkt wird und stärker gegen den Boden wirken kann.

Fig. 3 zeigt den Werkzeugrahmen 4 aus Fig. 2 in einer geschnittenen Seitenansicht, wobei die in radialer Richtung R wirkende Vorspannkraft dargestellt ist. Das Vorspannelement 8 ist gegenüber dem Werkzeugrahmen 4 als Widerlager abgestützt und den kontaktiert das Bodenwerkzeug 5 unmittelbar, wodurch es zu einem Verschwenken des Bodenwerkzeuges 5 in Richtung des Bodens kommen kann. Das in Form eines Schlauches ausgestaltete Vorspannelement 8 ist bodenseitig auf der Lagerstelle 15 des Bodenwerkzeuges 5 abgestützt. Das Vorspannelement 8 kann derart mit dem Werkzeugrahmen 4, einer Lagerstelle 6 und/oder einem Bodenwerkzeug 5 verbunden sein, dass eine Zugkraft und/oder Druckkraft übertragbar ist.

Eine alternativ ausgestaltete Vorspanneinrichtung 7 für ein Bodenwerkzeug 5 ist in einer geschnittenen Seitenansicht in Fig. 4 dargestellt. Das Vorspannelement 8 ist innerhalb des Werkzeugrahmens 4 angeordnet, welcher in Form eines zumindest teilweise geschlossenen Profils ausgebildet ist und Öffnungen zum Hindurchreichen der Bodenwerkzeuge 5 aufweist. Die Bodenwerkzeuge 5 sind außenseitig des Werkzeugrahmens 4 schwenkbar gelagert und durch ein Lagerelement 13 gesichert. Durch die innenseitige Anordnung des Vorspannelementes 8 in dem Werkzeugrahmen 4 ist dieses besser vor Umwelteinflüssen und Beschädigungen geschützt. Eine alternative, innenseitige Lagerung des Bodenwerkzeuges 5 in dem Werkzeugrahmen 4 ist in Fig. 5 dargestellt. Hierbei ist das Bodenwerkzeug 5 innenseitig des Werkzeugrahmens 4 durch ein Lagerelement 13 schwenkbar mit dem Rahmen 4 verbunden.

In Fig. 6 ist die Vorspanneinrichtung aus Fig. 5 in einer perspektivischen Ansicht ohne den Werkzeugrahmen 4 dargestellt. Das sich entlang der Längsachse 10 erstreckende Vorspannelement 8 wird an seiner Oberfläche 11 durch die Bodenwerkzeuge 5 kontaktiert. Die Bodenwerkzeuge 5 sind dabei oberhalb ihrer Lagerstelle 6 derart ausgeformt, dass das Bodenwerkzeug 5 das Vorspannelement 8 jeweils mehrfach mit einem linienförmigen Kontakt 15 unmittelbar kontaktiert. Hierdurch können bei der Beaufschlagung mit einer Vorspannkraft Beschädigungen an der Oberfläche 11 des schlauchförmigen Vorspannelementes 8 vermieden werden.

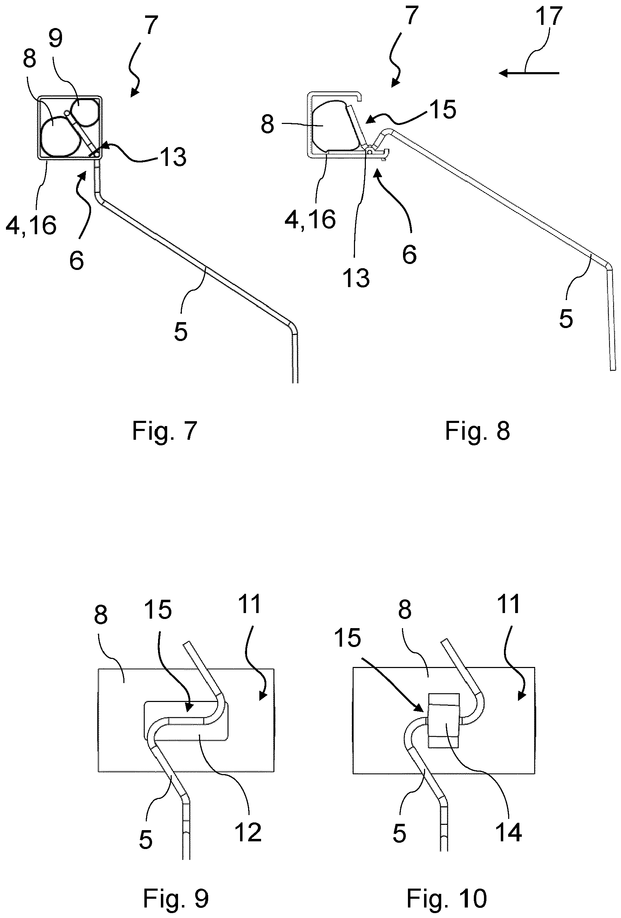

Um eine bessere Steuerung und Einstellbarkeit des Bodenwerkzeuges 5 zu erreichen, kann die Vorspanneinrichtung 7 zusätzlich zu dem Vorspannelement 8 ein Rückstellelement 9 aufweisen (Fig. 7), welches mit einer Rückstellkraft der Vorspannkraft entgegenwirken kann. Hierdurch können die Bodenwerkzeuge 5 beispielsweise aus einer Arbeitsposition in ein Transportposition in Richtung des Rahmens 4 verbracht werden. Ein Rückstellelement 9 kann beispielsweise in Form eines Federelementes (nicht dargestellt) oder in Form eines weiteren Schlauches ausgestaltet sein, welche im Wesentlichen parallel zu dem Vorspannelement 8 angeordnet sein kann. Ein schlauchförmiges Rückstellelement 9 kann im Wesentlichen identisch zu einem schlauchförmigen Vorspannelement 8 ausgestaltete sein, wodurch eine kostengünstige Realisierung des Rückstellelementes 9 ermöglicht werden kann. Das in Fig. 7 dargestellte Rückstellelement 9 ist an einer dem Vorspannelement 7 gegenüberliegenden Seite eines Endes des Bodenwerkzeuges 5 angeordnet, wodurch das Bodenwerkzeug 5 durch das Vorspannelement 8 und das Rückstellelement 9 in beide Richtungen steuerbar verschwenkbar ist. Das Bodenwerkzeug 5 ist innerhalb des Werkzeugrahmens 4 schwenkbar gelagert und durch eine Lagerelement 13 gesichert. Das Rückstellelement 9 ist ebenfalls innerhalb des Werkzeugrahmens 4 angeordnet. Über die Steuereinheit (nicht dargestellt) und ihre Komponenten kann das Rückstellelement 9 angesteuert werden.

Eine Ausgestaltung der Vorspanneinrichtung 7 an einem Werkzeugrahmen 4 in Form eines offenen Profils 16 ist in Fig. 8 dargestellt. Der Werkzeugrahmen 4 ist in Form eines entgegen der Arbeitsrichtung geöffneten, liegenden U-Profils ausgestaltet. Das Vorspannelement 8 ist innerhalb des Werkzeugrahmens 4 angeordnet und wirkt über einen Linienkontakt 15 unmittelbar auf das Bodenwerkzeug 5. Ein Lagerelement 15 zur profilinnenseitigen Lagerung des Bodenwerkzeuges 5 ist in Form einer lösbar mit dem Werkzeugrahmen 4 verbundenen Schelle ausgestaltet. Das schellenförmige Lagerelement 15 kann lösbar, formschlüssig mit dem Werkzeugrahmen 4 verbunden sein und das Vorspannelement 8 unmittelbar kontaktieren und durch dieses gegen Lösen gesichert sein.

Zur Erhöhung der Verschleißfestigkeit des Vorspannelementes 8 (Fig. 9) oder Rückstellelementes 9 beim Kontakt mit dem Bodenwerkzeug 5 ist an der Oberfläche 11 eine im Wesentlichen plane Kontaktfläche 12 ausgestaltet. Die Kontaktfläche 12 kann in Form eines Kontaktplatte ausgestaltet sein, welche stoffschlüssig mit der Oberfläche 11 des Vorspannelementes 8 oder des Rückstellelementes 9 verbunden sein kann. Das Bodenwerkzeug 5 kontaktiert die Kontaktfläche 12 unmittelbar mittels eines linienförmigen Kontaktes 15. Zur Übertragung von Druckkräften und/oder Zugkräften von dem Vorspannelement 8 oder des Rückstellelementes 9 auf das Bodenwerkzeug kann an der Oberfläche 11 ein Verbindungselement 14 vorgesehen sein, welches eine lösbare, formschlüssige Verbindung mit dem Bodenwerkzeug 5 ermöglicht. Das Verbindungselement 14 kann in Form einer Schlaufe ausgestaltet sein, welche zumindest teilweise mit der Oberfläche 11 des Vorspannelementes 8 oder des Rückstellelementes 9, insbesondere stoffschlüssig, verbunden ist. Ein Bodenwerkzeug 5, welches mittels des Verbindungselementes 14 mit dem Vorspannelement 8 verbunden ist, ist bei einer Ausdehnung des Vorspannelementes 8 in radialer Richtung R in eine erste Richtung, Richtung Boden, verlagerbar und bei einer Reduzierung der Ausdehnung des Vorspannelementes 8 in radialer Richtung R in eine zweite, der ersten entgegengesetzten, Richtung zurück verschwenkbar.

### Bezugszeichen

| | | | |
|---|---|---|---|
| 1 | Arbeitsgerät | A | Axiale Richtung |
| 2 | Koppelvorrichtung | R | Radiale Richtung |
| 3 | Rahmen | | |
| 4 | Werkzeugrahmen | | |
| 5 | Bodenwerkzeug | | |
| 6 | Lagerstelle | | |
| 7 | Vorspanneinrichtung | | |
| 8 | Vorspannelement | | |
| 9 | Rückstellelement | | |
| 10 | Längsrichtung | | |
| 11 | Oberfläche | | |
| 12 | Kontaktfläche | | |
| 13 | Lagerelement | | |
| 14 | Verbindungselement | | |
| 15 | Linienförmige Kontakt | | |
| 16 | Profil | | |
| 17 | Arbeitsrichtung | | |
| 18 | Fluidspeicher | | |
| 19 | Steuereinheit | | |
| 20 | Steuerventil | | |
| 21 | Pumpe | | |
| 22 | Fluidleitung | | |

## Patentansprüche

1. Landwirtschaftliches Arbeitsgerät zur Bodenbearbeitung mit einem Rahmen (3), welcher mindestens einen Werkzeugrahmen (4) umfasst, einer Mehrzahl von verschwenkbar an dem mindestens einen Werkzeugrahmen (4) angeordneten Bodenwerkzeugen (5), und einer Vorspanneinrichtung (7) zum Vorspannen der Bodenwerkzeuge (5) mittels einer Vorspannkraft, wobei die Vorspanneinrichtung (7) mindestens ein fluidgefülltes Vorspannelement (8) aufweist, **dadurch gekennzeichnet, dass** das Vorspannelement (8) mindestens einem Bodenwerkzeug (5) zugeordnet ist, das Vorspannelement (8), insbesondere unmittelbar, an dem Rahmen (3), insbesondere dem Werkzeugrahmen (4), angeordnet ist, und dass bei der Aufbringung der Vorspannkraft auf das mindestens eine Bodenwerkzeug (5) der Rahmen (3), insbesondere der Werkzeugrahmen (4), ein Widerlager des Vorspannelementes (8) bildet.

2. Arbeitsgerät nach Anspruch 1, **dadurch gekennzeichnet, dass** das Vorspannelement (8) mindestens ein schwenkbares Bodenwerkzeug (5) unmittelbar kontaktiert.

3. Arbeitsgerät nach Anspruch 1 oder 2, **dadurch gekennzeichnet, dass** das Vorspannelement (8), insbesondere in Form eines Schlauches, eine längliche Erstreckung entlang einer Längsachse (10) aufweist und die Vorspannkraft in einer radialen Richtung (R) des Vorspannelementes (8), im Wesentlichen senkrecht zu der Längsachse (10), wirkt.

4. Arbeitsgerät nach einem der vorhergehenden Ansprüche, **dadurch gekennzeichnet, dass** eine Oberfläche (11) des Vorspannelementes (8), zumindest teilweise, verschleißfest ausgestaltet ist und/oder zumindest teilweise eine im Wesentlichen ebene Kontaktfläche (12) zur Kontaktierung eines Bodenwerkzeuges (5) aufweist.

5. Arbeitsgerät nach einem der vorhergehenden Ansprüche, **dadurch gekennzeichnet, dass** das Vorspannelement (8) radial außenseitig mindestens ein Verbindungselement (12) zur Zug-/Druckkraft-Übertragung mit dem Rahmen (3), insbesondere dem Werkzeugrahmen (4), und/oder mindestens einem Bodenwerkzeug (5) aufweist.

6. Arbeitsgerät nach einem der vorhergehenden Ansprüche, **dadurch gekennzeichnet, dass** das Bodenwerkzeug (5) derart ausgebildet und ausgestaltet ist, dass das Bodenwerkzeug (5) einen linienförmigen Kontakt (15) mit dem Vorspannelement (8) ausbildet.

7. Arbeitsgerät nach einem der vorhergehenden Ansprüche, **dadurch gekennzeichnet, dass** der Rahmen (3), insbesondere der Werkzeugrahmen (4), in Form eines offenen oder zumindest teilweise geschlossen Profils (16) ausgebildet ist.

8. Arbeitsgerät nach einem der vorherigen Ansprüche, **dadurch gekennzeichnet, dass** ein Bodenwerkzeug (5) an einer an oder in dem Rahmen (3), insbesondere dem Werkzeugrahmen (4), ausgebildeten Lagerstelle (6) verschwenkbar gelagert ist.

9. Arbeitsgerät nach einem der vorherigen Ansprüche, **dadurch gekennzeichnet, dass** die Vorspanneinrichtung (7) ein dem Vorspannelement (8) entgegenwirkendes Rückstellelement (9) aufweist, wobei durch das Rückstellelement (9) eine der Vorspannkraft im Wesentlichen entgegenwirkende Rückstellkraft erzeugbar ist.

10. Arbeitsgerät nach Anspruch 9, **dadurch gekennzeichnet, dass** das Rückstellelement (9) in Form eines zweiten Vorspannelementes (8), insbesondere in Form eines Schlauches, ausgebildet ist, wobei insbesondere das Rückstellelement (9) unmittelbar an oder in dem Rahmen (3), insbesondere dem Werkzeugrahmen (4), angeordnet ist.

11. Arbeitsgerät nach einem der vorhergehenden Ansprüche, **dadurch gekennzeichnet, dass** die Vorspanneinrichtung (7) derart ausgestaltet und ausgebildet ist, dass mehrere Vorspannelemente (8) und/oder Rückstellelemente (9) einzeln oder in Gruppen betätigbar sind.

12. Arbeitsgerät nach einem der vorhergehenden Ansprüche, **dadurch gekennzeichnet, dass** mindestens ein Vorspannelement (8) und mindestens ein diesem Vorspannelement (8) zugeordnetes Rückstellelement (9) derart fluidisch miteinander verbunden sind, dass diese jeweils eine entgegengesetzte Bewegung in radialer Richtung (R) ausführen.

13. Arbeitsgerät nach einem der vorhergehenden Ansprüche, **dadurch gekennzeichnet, dass** mindestens zwei Vorspannelemente (8), und/oder mindestens zwei Rückstellelemente (9), welche in Arbeitsrichtung (17) im Wesentlichen hintereinander und/oder an demselben Rahmen (3), insbesondere Werkzeugrahmen (4), angeordnet sind, fluidisch gekoppelt sind.

14. Arbeitsgerät nach einem der vorhergehenden Ansprüche, **dadurch gekennzeichnet, dass** die Vorspanneinrichtung (7) mindestens einen Fluidspeicher (18), insbesondere Druckspeicher, mindestens ein Steuerventil (20), eine Pumpe (21) und/oder eine Steuereinheit (19) zur Ansteuerung mindestens eines Vorspannelementes (8) und/oder Rückstellelementes (9) aufweist.
